# EUROPEAN PATENT SPECIFICATION

(11) **EP 2 504 147 B1**
(45) Date of publication and mention of the grant of the patent: **02.01.2019**
(21) Application number: 10807651.4
(22) Date of filing: 25.11.2010
(51) Int. Cl.: B29C 47/10, B29C 44/34, B29C 47/38, B29C 47/60, B29C 47/92, B29K 25/00, B29B 17/00, C08J 11/06, B29C 44/50

(54) **Heat insulation panel and method of producing same.**
Wärmedämmplatte und Verfahren zu ihrer Herstellung.
Panneau d'isolation thermique et son procédé de production.

(30) Priority: 25.11.2009 IT UD20090216
(43) Date of publication of application: 03.10.2012
(73) Proprietor: Polymtec Engineering AG, Mauren (FL), Succursale Di Lugano, 6901 Lugano (CH)
(72) Inventor: GÖKCEN, Mehmet Celal, 76137 Karlsruhe (DE); LOCATELLI, Giuseppe, Walter, I-25031 Capriolo (IT)
(74) Representative: Petraz, Davide Luigi
(86) International application number: PCT/IB2010/003010
(87) International publication number: WO 2011/064651

(56) References cited:
- EP-A1- 0 296 408
- EP-A1- 0 442 102
- EP-A2- 2 025 691
- WO-A1-2009/014922
- DE-C1- 3 712 749
- DE-C1- 4 411 164
- GB-A- 2 043 648
- JP-A- 7 205 147
- JP-A- 62 041 016
- JP-A- 2004 230 574
- JP-A- 2007 262 181
- JP-U- 49 120 864
- US-A- 2 838 801
- US-A- 2 987 774
- US-A- 3 742 093
- US-A- 5 557 896

## Description

### FIELD OF THE INVENTION

The present invention concerns a closed-cell expanded article based on extruded polystyrene, and the method and plant to obtain said article. In particular, the article according to the present invention can be a panel, a slab or other, used for constructions and infrastructures as a heat and possibly acoustic insulation.

### BACKGROUND OF THE INVENTION

It is known to make slabs or panels of extruded polystyrene (XPS) with added graphite, in order to reduce the heat conductivity thereof, generally in order to achieve heat insulations in buildings.

Examples of production of such slabs or panels of extruded polystyrene can be found described in the European patent applications EP-A-0.863.175, EP-A-1.031.600, EP-A-1.661.939, GB2043648 A and EP-A-1.661.940.

The following documents are also known: EP-A-1-847.566, US-A-5,523,328, EP-A-0.584.612, US-A-5,302,625, US-A-3,883,624, EP-A-2.025.691, JP-A-2007/277294, US-A-4,452,751 and WO-A-2009/014922, which describe the manufacture of articles like panels, based on recycled polystyrene.

It the field of construction and infrastructures, there is an urgent need to build buildings with adequate heat insulation so as to obtain a high energy conservation certification. This need to offer buildings at a competitive price on the market can, however, contrast with the need to keep production costs low.

On this point it is known that the incidence on the final price of the heat insulation slabs or panels of the cost of buying the raw materials, typically first quality polystyrene granules, is very high. Therefore, the overall heat insulation of a building or infrastructure may be negatively influenced in terms of cost.

It would be desirable, for the purpose of limiting costs, to reduce the costs of the raw materials with which the insulating slabs or panels are made.

Purpose of the present invention is to achieve an article based on extruded polystyrene and a relative production plant, and to perfect a relative method to extrude the polystyrene and to manufacture the article, which on the one hand have a limited cost and on the other hand a high efficiency at least of heat insulation.

The Applicant has devised, tested and embodied the present invention to overcome the shortcomings of the state of the article and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, one feature of the present invention concerns a closed-cell expanded article based on extruded polystyrene in the form of slab, panel or flexible sheet, to make heat insulations, typically in building constructions or infrastructures, which is made with granules of re-granulated polystyrene (GPPS), using the scrap from industrial working or production or from primary production plants, in particular scrap from the producers of panels or slabs of extruded polystyrene EPS, typically containing native graphite. The re-granulated material deriving from such industrial processes and workings for the production of polystyrene, unlike materials deriving from trash, such as solid urban waste, does not need particular steps to remove pollutants and refuse possibly present therein.

According to the invention, the material comprises scrap from industrial production lines and not discards from post consumption products, solid urban waste and suchlike, and therefore it is not polluted by residues, additional chemical compounds or other.

Normally, the use of re-granulated material from scrap in order to make the slabs or panels in question is practically impossible with the plants and working processes currently known.

In particular, material re-granulated from scrap as above would normally be practically unusable, as far as re-use in the production of sheets, panels or slabs in question is concerned, due to its high value of "Melt Flow Index" (M.F.I.), which can even be higher than 40 and can even reach values between 40 and 60, against a traditional value for first quality material that is normally from 1.6 to a maximum of 25. Consequently, with high M.F.I. values there is a corresponding low viscosity, which creates problems with the amalgamation of the gas.

The Melt Flow Index is substantially the index of fluidity of a melted polymer; it is measured (ASTM D-1238) by loading the molten material at a determinate temperature in a heated cylinder to which a little cylinder is attached (diameter 2.091 mm and length 8 mm) which exerts a constant force and makes the polymer flow through a capillary: the weight of the polymer exiting in 10 minutes is the value of Melt Flow Index, expressed in g/(10 min). The greater the weight of material exiting, the higher the Melt Flow Index value and the lower the viscosity of the polymer.

The scrap material, after a re-granulation operation of a known type, has the same appearance as first quality polystyrene granules.

However, as we said, material re-granulated from scrap, as far as its chemical-physical properties are concerned, has a high M.F.I. value, which can even reach values between 40 and 60.

Furthermore, mechanically the material recycled from industrial lines differs from first quality material in that it is extremely fragile, particularly before being processed according to the present invention.

The present invention therefore provides to produce an article, such as a panel slab or other, in particular used in constructions and infrastructures for heat insulation, or a flexible sheet for various applications, for example such as an under-floor lagging for heat insulation, or other article, starting from material that cannot normally be 100% used due to its great fragility, such as re-granulated polystyrene from recycling coming from processing scrap or from primary production plants.

In some forms of embodiment, the re-granulated polystyrene from processing scrap or industrial production has a high M.F.I. value comprised between 5 and 60, preferably comprised between 20 and 50, even more preferably comprised between 30 and 40.

In some forms of embodiment, the article may comprise substantially up to 100% of re-granulated polystyrene from scrap. In particular, with polystyrene from scrap having M.F.I. values of up to 40, it is possible to use up to 100% of re-granulated polystyrene from scrap in the final product.

On the contrary, with polystyrene from scrap having M.F.I. values from about 40 to about 60, it is preferable to use re-granulated polystyrene from scrap comprised between about 70% and about 90%, preferably between about 80% and about 90%, and first quality polystyrene comprised between about 10% and about 30%, preferably between about 10% and about 20%, in the final product.

The present disclosure further concerns a plant for the production of a closed-cell expanded article based on extruded polystyrene, in the form of slab, panel or flexible sheet to make heat insulations, which comprises an extrusion unit provided with extrusion means which have extrusion profiles able to improve the workability of polystyrene with a high M.F.I. value and therefore conformed to achieve the extrusion of re-granulated polystyrene granules from working or industrial production scrap, not discards from post-consumption products, solid urban waste and suchlike, having a high M.F.I. value comprised between 5 and 60, preferably comprised between 20 and 50, even more preferably comprised between 30 and 40.

The above profile of the screws is able to cause the polystyrene to melt so that the molten mass obtained can receive an expansion gas introduced into the extrusion unit by means of injection means, typically gas injection nozzles, associated with the extrusion unit.

In some forms of embodiment, the extrusion unit is formed by a co-rotating two-screw extrusion member.

In other forms of embodiment, the extrusion unit is a tandem extrusion unit, that is, with two or more extrusion members in series, of which a first extrusion member can be one-screw or two-screw and the second extrusion member is normally of the one-screw-type.

In some forms of embodiment, the profiles of all the extrusion screws of the extrusion unit have said special extrusion profile.

In other forms of embodiment, the profiles of the screws are different from each other, but in any case suitable for working the polystyrene based material in question.

In some forms of embodiment, the extrusion means are configured as:
- a co-rotating two-screw extruder comprising a first and a second extrusion screw, in which the first screw has an extension beyond the length of the second screw, in the direction of feed of the material, defining a cooling segment and in which, for each screw, there is a plurality of mixing sections having an overall sum of corresponding lengths with a ratio which, with respect to the overall length of each screw, excluding the length of the cooling segment, is comprised between about 32.5% and 38.5%, preferably between about 35% and 36%; or
- a two-screw-one-screw tandem, comprising a first two-screw extruder to which a second one-screw extruder is connected in cascade, in which for each screw of the first extruder there is a plurality of mixing sections in which, for each screw, the ratio between the sum of the length of mixing sections and the overall length of each screw is comprised between about 18% and 22%, preferably between about 19% and 21%; or
- a one-screw-one-screw tandem, comprising a first one-screw extruder to which a second one-screw extruder is connected in cascade.

In some forms of embodiment, the plant is suitable to work a fine material substantially of 100% of re-granulated polystyrene from scrap in the final product, also according to the high M.F.I. value of the polystyrene from scrap that is used.

In particular, with polystyrene from scrap having M.F.I. values up to about 40, it is possible to use up to 100% of re-granulated polystyrene from scrap in the final product. In some forms of embodiment, with polystyrene from scrap having M.F.I. values from about 40 to about 60, it is preferable to use re-granulated polystyrene from scrap comprised between about 70% and about 90%, preferably comprised between about 80% and 90%, and first quality polystyrene comprised between about 10% and about 30%, preferably comprised between about 10% and 20% in the final product.

In other forms of embodiment, using suitable extrusion means as in the solutions described above, with a co-rotating two-screw with an extension cooling segment, or a two-screw-one-screw tandem, or a one-screw-one-screw tandem, it is possible to use up to 100% re-granulated polystyrene from scrap in the final product even with polystyrene from scrap having M.F.I. values up to about 40-60.

Therefore, unlike known extrusion systems that suffer from the disadvantages discussed above, the extrusion system of the present disclosure is able to work successfully even a mass of material substantially formed by 100% of polystyrene from scrap with M.F.I. values of up to even 40-60.

In some forms of embodiment, the plant according to the present disclosure comprises an extrusion unit, at least a homogenizer, an extrusion head, calibrating rolls or plates, a first drawing unit, a cutting section, a milling section, a squaring section and a packing section.

In one form of embodiment, the plant comprises two or more homogenizers in series, in order to work effectively the material with high M.F.I. values.

According to one form of embodiment, the homogenizer is a static homogenizer, for example of the "Sulzer" type.

In some forms of embodiment, the calibrating plates are plates disposed immediately at exit from the extrusion head, used to regulate and control the thickness of the extruded product at exit from the extrusion head.

In some forms of embodiment, the first drawing unit also has calibrating rolls to regulate and control the thickness of the extruded product that is advancing.

In some forms of embodiment, the milling section is able to achieve workings on the lateral surfaces of the extruded product, to define desired shapings for coupling one artifact and the other, useful in the assembly steps.

In some forms of embodiment, the squaring section is able to achieve workings on the leading and tail surfaces of the extruded product, to define other desired shapings for coupling one artifact and the other, also useful in the assembly steps.

Some forms of embodiment provide that, before the cutting section, it is possible to put in line work stations able to diversify the appearance of the upper and lower surfaces of the worked product, according to the different applications.

In one form of embodiment, the present disclosure provides to introduce the re-granulated polystyrene into the extrusion unit. In one form of embodiment, simultaneously with the polystyrene, a flame-retardant additive is introduced into the extrusion unit, preferably between about 1% and 3% in weight of the final product. Typically, the main flame-retardants required by all the main national and international regulations in this field and used in the building field, in constructions in general and in infrastructures, for heat insulation with expanded or extruded polystyrene, are organic halogenated compounds or chloroparaffins modified with inorganic synergistics, such as for example bromide trioxide. The dosage of the flame-retardants depends on the strictness of the regulations and the thickness of the final products.

It should be noted that, in some advantageous forms of embodiment, a determinate quantity of flame-retardants deriving from the scrap material and which satisfies production requirements and regulations, may already be provided native in the original re-granulated material, without needing to add flame-retardants as described above. This can have a considerable advantage in economic terms.

Furthermore, in some forms of embodiment, again simultaneously with the re-granulated polystyrene, a nucleant additive is also introduced into the extrusion unit, able to homogenize and control the expansion of the fluid mass. The nucleant is introduced preferably between about 0.5% and 1.5% in weight of the final product. Generally, nucleant additives are important in expanded structures with physical gases and are based on talc derivates or in combination with citric acid salts.

Moreover, in some forms of embodiment, simultaneously with the polystyrene, an additive based on graphite is also introduced into the extrusion unit, as well as the graphite that is normally already present natively in the recycled polystyrene, in order to further improve the heat insulation properties of the final product, preferably between about 1% and 10% in weight, more preferably between about 1% and 5% in weight of the final product, in some forms of embodiment from 1.5% to about 2.5% in weight.

Graphite has a considerable advantage in energy saving in the heating and melting step of the re-granulated polystyrene extruded, since graphite retains the heat supplied better.

One form of embodiment provides to use an additive based on carbon, which can reduce the heat conductivity value by as much as 50%, considerably increasing the insulation coefficient of the panel. The additive is based on a carbon complex with characteristics different from standard graphite, but with reflection performances of the long IR rays that are similar to or an improvement on graphite. The additive has a lower electric conductivity than graphite, with a consequent reduced intrinsic heat conductivity (barrier effect). The lamellar dimension of the carbon in the additive is comprised between 7 and 10 micron so as to have the advantageous effects of heat insulation. The percentage use of the additive is lower than or equal to 5% in weight.

Some forms of embodiment provide that an additive based on micro-spheres of expanded rubber is also introduced into the extrusion unit, or other compatible sound-absorbing material, in order to improve the sound-proofing properties of the product.

In some forms of embodiment, micro-spheres are used or pre-disperseds based on elastomeric polymers or rubbers, or flours deriving from vegetable fibers and/or wood; these compounds are used between about 5% and about 10% in weight since they are able to function as sound-proofing and therefore reduce the transmission of noise in decibels through the walls, ceilings or other.

In some forms of embodiment, the expansion gas can be chosen from a group comprising one of the following gases, or mixtures thereof: butane, gas 152a (approved by the FDA as a non-toxic gas and therefore suitable for the production of articles intended for contact with food products, such as heat-molded food containers), gas 152a and dimethyl-ethylene (DME), gas 152a and carbon dioxide, gas 142/22 (for example in those countries where it is still allowed to use it), gas 134a, carbon dioxide with alcohol and butane.

According to one form of embodiment, the molten material, with the additives as above incorporated, receives the expansion gas or gases in correspondence with one or more positions of the extrusion unit in which it is provided that the polystyrene in granules becomes a molten mass, usually about half way along the path of the extrusion unit, even if this can depend on processing parameters, such as temperature, pressure, or on the properties of the original material.

At this point the expansion step begins and subsequently the material, downstream of the extrusion unit, enters the homogenizer.

In a specific form of embodiment for the production of slabs or panels, after the homogenizer the extrusion head is a plane extrusion head.

In this embodiment the polystyrene enters the plane extrusion head specifically developed to be able to receive, contain and expel highly fluid material, that is, with a high MF.I. value.

In another form of embodiment, specific for the production of sheet material, after the homogenizer the material passes through a tubular extrusion head and immediately afterwards, in the cutting section there is a cutter that cuts the tubular extruded product so as to obtain a flat sheet. The sheet thus obtained passes through the spreading rolls, positioned like a rolling press, the function of which is to spread the sheet and prevent folds in it. Then it continues to the packing section where it is wound in a roll. The rolls of sheet material are collected on reels. In some forms of embodiment, in the packing section the slab or panel is cut to size according to the client's requirements.

In some forms of embodiment, the intermediate workings on the upper and lower surface, before the cutting section, can comprise workings able to achieve: skinless surface, skinless surface and with both longitudinal and transverse grooves, wafer effect surface, or with a honeycomb pattern or design on the surface.

The present disclosure also concerns an extrusion screw for an extrusion unit of re-granulated polystyrene from industrial working or production scrap or from primary production plants, not discards from post-consumption products, solid urban waste or suchlike, which has an extrusion profile conformed to achieve the extrusion of granules of re-granulated polystyrene from discards of industrial production having a high M.F.I. value comprised between 5 and 60, preferably comprised between 20 and 50, even more preferably comprised between 30 and 40, said profile being able to cause the polystyrene to melt so that the liquid mass obtained can receive an expansion gas/gases introduced into the extrusion unit.

Another feature of the present disclosure concerns a method to manufacture a closed-cell expanded article based on extruded polystyrene from industrial working or production scrap or from primary production plants, in the form of a slab, panel or flexible sheet to make heat insulation, which provides a step of continuous extrusion of granules of re-granulated polystyrene from industrial working or production scrap or from primary production plants, not discards from post-consumption products, solid urban waste and suchlike, having a high M.F.I. value comprised between 5 and 60, preferably comprised between 20 and 50, even more preferably comprised between 30 and 40 in which, during the extrusion step, an expansion gas is continuously introduced in order to achieve the expanded article.

In some forms of embodiment, the method is suitable to work a material substantially up to 100% of re-granulated polystyrene from scrap in the final product. In particular, from polystyrene from scrap having M.F.I. values of up to about 40, it is possible to use up to 100% of re-granulated polystyrene from scrap in the final product. On the contrary, with polystyrene from scrap having M.F.I. values from about 40 to about 60, it is preferable to use re-granulated polystyrene from scrap comprised between about 70% and about 90%, preferably comprised between about 80% and about 90%, and first quality polystyrene comprised between about 10% and about 30%, preferably comprised between about 10% and about 20%, in the final product.

According to one form of embodiment, the polystyrene article, slab or panel, that can be obtained with the present disclosure has a thickness varying between 2 and 20 cm, but in some forms of embodiment it can also have a thickness greater than 20, for example even between 25 cm and 30 cm.

In some forms of embodiment, the width of the article is connected to the thickness, since up to a thickness of 5 cm the width will be from 20 cm to 150 cm, up to a thickness of 8 cm the width will be from 20 cm to 120 cm and up to a thickness of 20 to 25 or 30 cm the width will be from 20 cm to 50 cm.

In some forms of embodiment the length of the slab or panel can vary from about 100 cm to about 1200 cm.

In some forms of embodiment , the heat conductivity λ of the slab, panel or sheet obtainable is less than 0.031 W/m*°K.

In some preferable forms of embodiment of the present invention, the heat conductivity λ of the slab, panel or sheet obtainable is less than 0.027 W/m*°K.

Normally, the heat conductivity λ (W/m*°K) increases proportionately to the thickness of the final product.

For example, for a thickness of 2 cm, the heat conductivity λ of the slab or panel can be less than 0.026 W/m*°K, for example comprised between 0.0245 W/m*°K and 0.0255 W/m*°K.

In the case of a sheet, normally the thickness can vary between 3 mm to 10 mm.

The width of the roll on which the sheet is wound is comprised between 50 cm and 150 cm.

In some forms of embodiment, with the thickness values between 3 mm and 10 mm as indicated above, the heat conductivity of the sheet according to the disclosure can be lower than 0.026 W/m*°K, for example comprised between 0.0245 W/m*°K and 0.0255 W/m*°K.

The addition of sound-proofing material such as micro-spheres of expanded rubber allows to have a reduced acoustic insulation coefficient against the noise of footsteps.

The density of the final product, both slab and sheet, is advantageously comprised between 30 kg/m³ and 50 kg/m³.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of a plant according to the present disclosure;
- fig. 2 is an enlarged representation of part of the plant in fig. 1;
- fig. 3 is an enlarged representation of another part of the plant in fig. 1;
- fig. 4 is a plane representation of a first form of embodiment of extrusion means according to the present disclosure;
- fig. 5 is a schematic representation of the extrusion means in fig. 4 associated with other operating units of the plant according to the present disclosure;
- fig. 6 is a plane representation of a second form of embodiment of extrusion means according to the present disclosure;
- fig. 7 is a schematic representation of the extrusion means in fig. 6 associated with other operating units of the plant according to the present disclosure;
- fig. 8 is a plane representation of a third form of embodiment of extrusion means according to the disclosure;
- fig. 9 is a schematic representation of the extrusion means in fig. 8 associated with other operating units of the plant according to the present disclosure.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF EMBODIMENTS

With reference to the attached drawings, embodiments described herein refer to a plant 10 used to extrude re-granulated polystyrene from industrial working or production scrap or from primary production plants in order to make panels, slabs, sheets or suchlike of the closed-cell expanded article type with the purpose of heat insulation, and possibly sound-proofing, for example in the field of constructions and infrastructures.

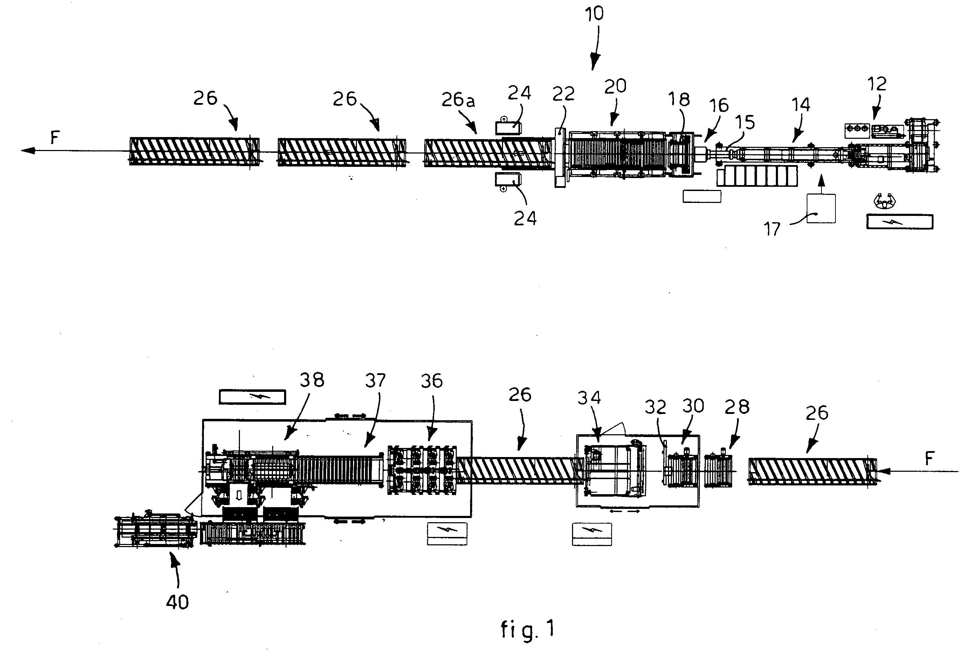

The plant 10 develops in the direction in which the work is performed, indicated by the arrow F (fig. 1) and comprises an extrusion unit 12 in this case comprising screw-type extrusion means 14, configured to achieve the continuous extrusion of the material introduced. The screw-type extrusion means 14 have a special extrusion profile of the screw, developed with the purpose of working polystyrene with a high M.F.I. value, as the polystyrene to be worked according to the invention is considered.

The extrusion means, in particular the relative screws, whether in the forms of embodiment as a two-screw or as a one-screw, may be internally thermostated with diathermic oil.

The extrusion unit 12 is suitably provided with heating means to melt the re-granulated material which is introduced, then extruded and expanded.

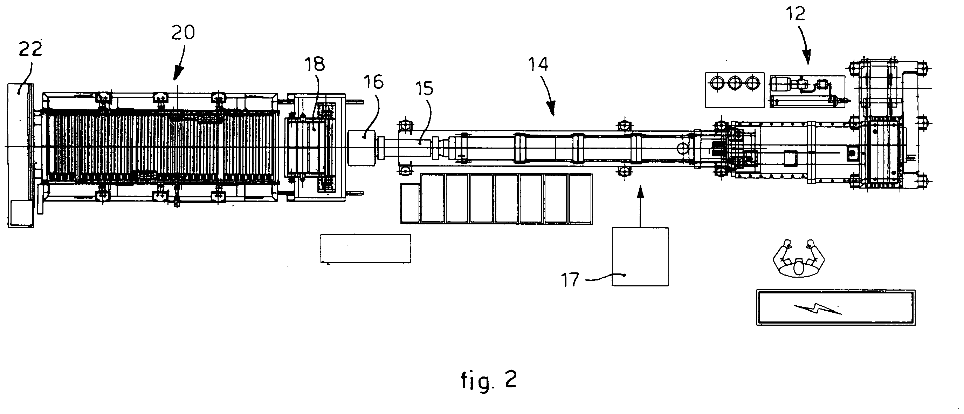

The plant 10 comprises introduction means, in this case a group of pumps 17 (fig. 2), for example of the Lewa type, to introduce an expansion gas substantially half way through the path of the extrusion unit 12, that is, when the granulated polystyrene has become a molten mass. The introduction of gas into the hot molten mass occurs continuously during the extrusion step, to obtain a product with a desired degree of expansion. Depending on the expanding agents used, one or more zones may be chosen for the injection of expansion gas.

At exit from the screw-type extrusion means 14 there is at least a static homogenizer 15, in this case advantageously of the Sulzer type (fig. 2), suitable for the further cooling and homogenization of the material re-granulated from scrap used according to the disclosure.

Subsequently, the plant 10 comprises a semi-automatic extrusion head 16, also suitable to change the extrusion thicknesses.

The extrusion head 16 comprises a calibrated plate the function of which is to compress the cells of the expanded molten mass, which is mixed continuously, and the cells are thus closed. The advantage of obtaining a closed-cell expanded article is to increase the effect of non-permeability of water and humidity in the final product, obtaining an effective barrier against steam.

The plant 10 then provides calibrating rolls or plates 18, to control the thickness immediately at exit from the extrusion head 16, and subsequently a first drawing unit 20, also advantageously with the function of calibrating the thicknesses.

At exit from the drawing unit 20 a mechanical transverse cutting unit 22 is disposed, for start and end of production and usable in the event of an emergency.

Subsequently, a plurality of idle roller units 26 are provided, in this case four in number, in series, and in correspondence with a first idle roller 26a a shredder member 24 may be provided, to shred the working scraps.

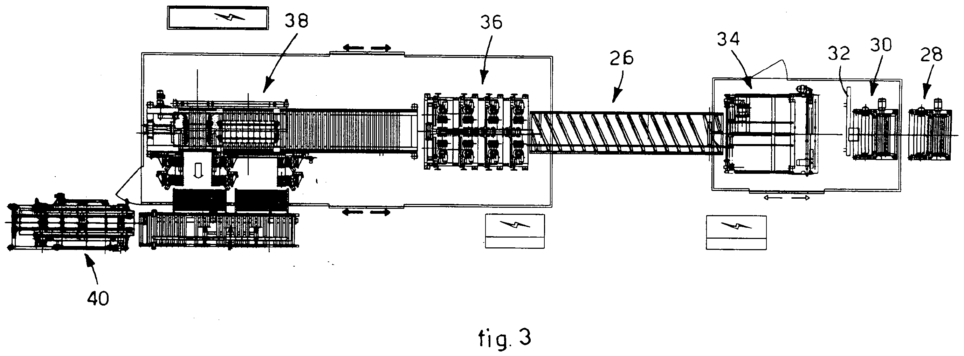

Subsequently, downstream of the series of idle roller units 26, the plant 10 provides two stations 28 and 30, usable in alternation with each other according to needs, for a process to create upper and lower surfaces of the product that allow glues or adhesive mortars - which will be used to attach the final product on-site - to have an effective grip (fig. 3).

In particular, a first station 28 is able to effect a surface incision on the extruded piece with a honeycomb pattern, wafer or suchlike, to obtain a desired gripping surface.

A second station 30, as an alternative to the first station 28, removes the external skin of the extruded piece and can also make a longitudinal groove, again to obtain an effective gripping surface.

Subsequently, the plant 10 also comprises, to give a non-restrictive example, a marking station 32, which typically makes an ink print so as to achieve writings or drawings on the final product.

The plant 10 then provides a cutting section 34, in order to cut the panels, slabs or other to size, another idle roller unit 26 and a milling section 36, to achieve desired coupling shapings on the lateral surfaces of the article.

Subsequently, a second drawing unit 37 feeds the worked pieces to a squaring section 38 able to make coupling shapings on the leading and tail surfaces of the extruded piece. At the end, the panels, slabs or other worked pieces are ordered and packed with a stacker 40. Two or more stackers may be provided at exit, depending on the dimensions of the panels, for example a stacker for panels from 2500/3000 mm or one for panels from 6000 mm.

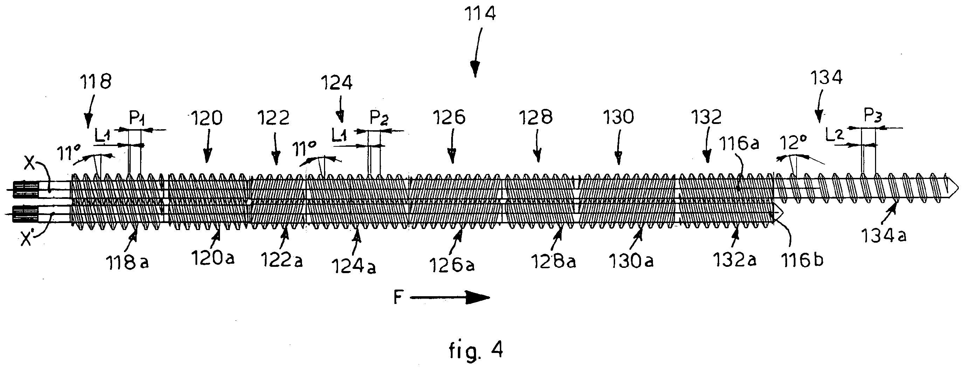

Fig. 4 shows a first form of embodiment of the screw-type extrusion means, indicated for convenience by the reference number 114, configured substantially as a co-rotating two-screw extruder which provides two screws disposed in parallel, of which a first screw 116a and a second screw 116b, disposed along relative axes of rotation X, X', parallel to each other, which define a direction of feed, arrow F, of the material. The screws 116a, 116b typically have a diameter of about 160 mm - 180 mm for a production of about 300 - 500 Kg/hr, and inside they can be thermostated with diathermic oil.

The threaded extrusion profile of the screw-type extrusion means 114 has a development of the relative spirals that varies both in the direction of inclination and also in pitch, along the axis of rotation F of the screws 116a, 116b, which also defines the direction and sense of feed of the extruded material, defining a plurality of operating sections 118, 120, 122, 124, 126, 128, 130 and 132, as well as an extension, as we shall see hereafter, of one of the two screws 116a, 116b for a cooling segment 134.

In particular, according to the present disclosure, transport sections 118, 124, 128 are provided, a melting section 120, mixing sections 122, 126, 130 and a cooling section 132.

According to the present disclosure, the profile of the screws in the transport sections 118, 124, 128, the melting section 120 and the cooling section 132, and also in the cooling segment 134, faces backward, that is, with a negative inclination with respect to the direction of feed F of the material.

Moreover, according to the present disclosure, the profile of the screws in the mixing sections 122, 126, 130 faces forward, that is, with a positive inclination with respect to the direction of feed F of the material.

The inclination of each spiral or crest of the thread of the screws 116a, 116b, whether it is negative - that is, in the opposite direction to the direction of feed (arrow F) - or positive - that is, in the same direction as the direction of feed - is comprised between about 10.5° and about 11.5°, for example about 11°, with respect to the perpendicular to the corresponding axes X, X', except for the cooling segment 134, in this case of the first screw 116a which has an inclination of each spiral of the thread of the screw between about 11.5° and about 12.5°, for example about 12°.

According to the present disclosure, for each screw 116a, 116b the ratio between the sum of the length of the mixing sections 122, 126, 130 and the overall length of each screw 116a, 116b, except for the extension of the cooling segment 134, is comprised between about 32.5% and 38.5%, preferably between about 35% and 36%, for example about 35.6%.

On the contrary, in the state of the art, for this type of co-rotating two-screw extruder, this ratio does not go beyond about 30.3%, since an adequate cooling is required which in the present disclosure is also given by the addition of the last cooling segment 134.

According to the present disclosure, moreover, the length of the cooling segment 134 is about 23%-27%, preferably 24-26%, for example about 25%, of the overall length of each screw 116a, 116b given by the sum of the length of the sections 118 - 132.

Furthermore, the ratio between the length of the cooling section 132 and the overall length of each screw 116a, 116b, except for the extension of the cooling section 134, is comprised between 13% and 14%, for example about 13.4%. On the contrary, in the state of the art, this ratio is greater, normally about 17-18%.

In this way, by relying on the cooling segment 134, it is possible to reduce the length of the cooling section 132 in order to increase the length of the mixing sections 122, 126, 130, and it is thus possible to mix effectively and extrude successfully the recycled polystyrene with the properties in question.

Furthermore, in the form of embodiment 114 of the present disclosure the lengths of the transport section 118 have been varied with respect to the melting section 120, increasing the length of the latter to a ratio between length of the melting section 120 and the transport section 118 comprised between about 90% and 92%, whereas in the state of the art normally this ratio is about 53-54%. In this way, more melting time is given to the material based on recycled polystyrene, allowing to work even 100% of polystyrene from scrap with M.F.I. values up to about 40 - 60.

In some forms of embodiment, initially a first transport section 118 is provided, in which the screws 116a, 116b have the same profile 118a facing backward, that is, with a negative inclination with respect to the direction of feed F of the material, and a first pitch P1 of the spirals comprised between about 65 mm and 75 mm, for example about 70 mm. The length of the first section 118 is comprised between about 510 mm and about 550 mm, for example about 530 mm.

The width L1 of each crest of the spirals of the screws 116a and 116b is constant for all the sections 118 - 132 and is comprised, in some forms of embodiment, between 12 mm and 16 mm, for example 14 mm.

Subsequently, a second melting section 120 is provided, where the material is heated and melted, in which the screws 116a, 116b have the same profile 120a facing backward, that is, with a negative inclination with respect to the direction of feed F of the material, and a second pitch P2, smaller than the first pitch P1 of the first section 118, comprised between about 55 mm and 65 mm, for example about 60 mm.

The second pitch P2 of the second section 120 is equal to the pitch of the subsequent sections 124, 126, 128, 130 and 132.

The length of the second section 120 is comprised between about 460 mm and about 500 mm, for example about 480 mm.

Afterwards, a third mixing section 122 is provided, where the material is mixed, and in which the screws 116a, 116b have the same profile 122a facing forward, that is, with a positive inclination with respect to the direction of feed F of the material. The length of the third section 122 is comprised between about 300 mm and about 500 mm, for example about 480 mm.

A fourth transport section 124 is also provided, in which the screws 116a, 116b have the same profile 124a facing backward, that is, with a negative inclination with respect to the direction of feed F of the material. The length of the fourth section 124 is comprised between about 560 mm and about 600 mm, for example about 580 mm.

Subsequently a fifth mixing section 126 is provided, where the material is mixed, in which the screws 116a, 116b have the same profile 126a facing forward, that is, with a positive inclination with respect to the direction of feed F of the material. The length of the fifth section 126 is comprised between about 530 mm and about 570 mm, for example about 550 mm.

Then a sixth transport section 128 is provided, in which the screws 116a, 116b have the same profile 128a facing backward, that is, with a negative inclination with respect to the direction of feed F of the material. The length of the sixth section 128 is comprised between about 420 mm and about 460 mm, for example about 440 mm.

Then there is a seventh mixing section 130, where the material is mixed, in which the screws 116a, 116b have the same profile 130a facing forward, that is, with a positive inclination with respect to the direction of feed F of the material. The length of the seventh section 130 is comprised between about 530 mm and about 530 mm, for example about 550 mm.

An eighth cooling section 132 is also provided, in which the screws 116a, 116b have the same profile 132a facing backward, that is, with a negative inclination with respect to the direction of feed F of the material. The length of the eighth section 132 is comprised between about 515 mm and about 555 mm, for example about 535 mm.

Finally, one of the two screws, in this case the first screw 116a, extends beyond the length of the other screw, in this case the second screw 116b, by a further cooling segment 134, also configured as a screw, starting from the eighth cooling section 132, which has a profile 134a facing backward, that is, with a negative inclination with respect to the direction of feed F of the material. For example, the extension cooling segment 134 has a diameter of about 150 mm - 170 mm.

The spirals of the profile 134a are disposed at a third pitch P3 from each other, comprised between 75 mm and 85 mm, for example 80 mm.

The width L2 of each crest of the spirals of the profile 134a is constant and comprised between 10 mm and 14 mm, for example 12 mm.

The length of the cooling segment 134 is comprised between 980 mm and 1020 mm, for example about 1000 mm.

The length of each screw 116a, 116b, except for the cooling segment 134, is therefore comprised between about 3825 mm and 4145 mm, for example about 3985 mm. According to the embodiment in fig. 4, the introduction of expansion gas into the two extrusion screws 116a, 116b is effected in the relative transport sections 124, substantially half way, that is, after about 1570-1670 mm, for example about 1620 mm.

Increasing the length of only one of the two extrusion screws, we can obtain the advantage of cooling that only one-screw extruders have, which having only one screw in rotation can therefore cool the plastic material more. This because one-screw extruders do not have the constraint of co-penetration between the two screws, as happens in two-screw extruders where the plastic material that remains in contact with the threads of the co-penetrating extrusion screws must have a minimum temperature that allows it to melt so as to be able to allow the screws themselves to rotate.

Increasing the length of only one of the two extrusion screws, in any case the advantage remains that we have the typical mixing power of a co-rotating two-screw extruder. Therefore, a varied range of mixes of raw materials can be used, and high percentages of recycled material.

Furthermore, increasing the length of only one of the two extrusion screws with the cooling function, it is possible to increase, as we said, the mixing zones in the part of the extruder that remains with a co-rotating two-screw, therefore increasing the mixing power of the extruder.

Moreover, with the extension of one of the two screws with the cooling function, it is possible to use in the rest of the extrusion screws less violent cooling temperatures and therefore to use less power, given the same delivery.

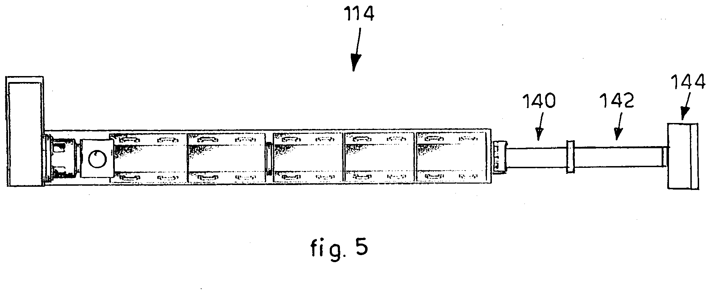

Fig. 5 shows how the two-screw extruder 114, which functions as a primary extruder, is put in cooperation with a static mixer 140 Sulzer type SMR, to further cool the material, a subsequent static mixer 140, for example a static mixer 142 Sulzer type Optifoam, with the possibility of introducing further gas from 0.1% to 1% in order to lower the density to about 25-30%, and a subsequent automatic head or draw-plate 144.

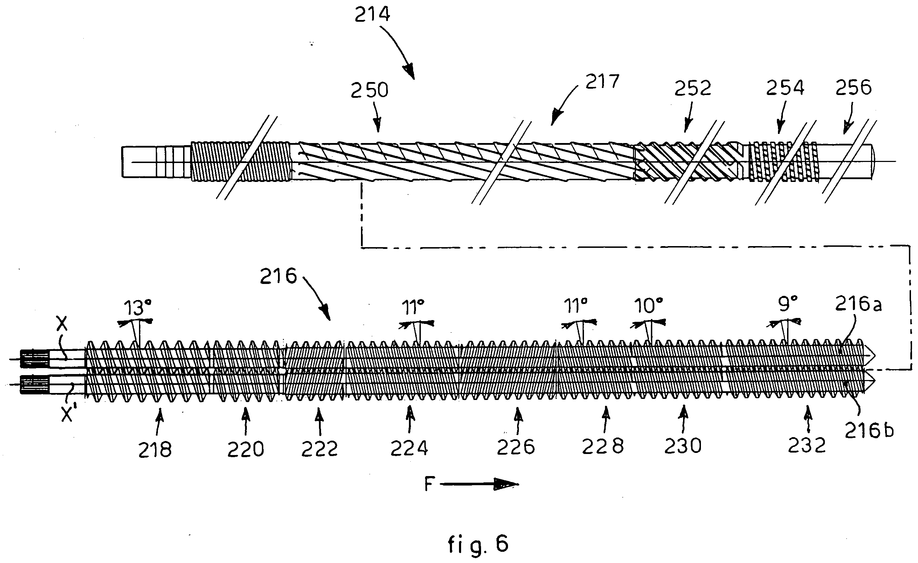

Fig. 6 shows a second form of embodiment of the screw-type extrusion means, indicated for convenience by the reference number 214, configured substantially as a two-screw in one-screw tandem.

In this form of embodiment, a primary extruder 216 of the two-screw type is provided, and a secondary one-screw extruder 217.

The primary extruder 216 provides two screws 216a, 216b, disposed in parallel and along relative parallel axes of rotation X, X' which define a direction of feed, arrow F, of the material. The screws 216a, 216b typically have a diameter of about 90 mm for a production of about 800 Kg/hr, and about 110 mm for a production of about 1200 Kg/hr.

The threaded profile of the primary extruder 216 has a development of the relative spirals that varies both in the direction of inclination and also in pitch, along the axis of rotation F of the screws 216a, 216b, which also defines the direction and sense of feed of the extruded material, defining a plurality of operating sections 218, 220, 222, 224, 226, 228, 230 and 232.

In particular, according to the present disclosure, along the direction of feed F of the material, a first transport section 218 is provided, a melting section 220, a first mixing section 222, a second transport section 224, in which the expansion gas is injected, a second mixing section 226, and cooling sections 228, 230, 232.

In any case, melting is started in the first transport section 218 and is completed in the first mixing section 222.

The expansion gas is advantageously introduced substantially half way through the second transport section 224.

According to the present disclosure, the profile of the screws in the transport sections 218, 224, 228, the melting section 220 and the cooling sections 228, 230, 232 faces backward, that is, with a negative inclination with respect to the direction of advance F of the material.

Moreover, according to the present disclosure, the profile of the screws in the mixing sections 222 and 226 faces forward, that is, with a positive inclination with respect to the direction of advance F of the material.

The inclination of each spiral of the thread of the screws 216a, 216b in the first transport section 218 and the melting section 220 is comprised between about 12.5° and about 13.5°, for example about 13°, with respect to the perpendicular to the corresponding axes X, X'.

The inclination of each spiral of the thread of the screws 216a, 216b in the sections from 222 to 228 is comprised between about 10.5° and about 11.5°, for example about 11°, with respect to the perpendicular to the corresponding axes X,X'.

The inclination of each spiral of the thread of the screws 216a, 216b in the cooling section 230, the seventh in the direction of feed F, is comprised between about 9.5° and about 10.5°, for example about 10°, with respect to the perpendicular to the corresponding axes X, X'.

The inclination of each spiral of the thread of the screws 216a, 216b in the cooling section 232, the eighth in the direction of feed F, is comprised between about 8.5° and about 9.5°, for example about 10°, with respect to the perpendicular to the corresponding axes X, X'.

According to the present disclosure, for each screw 216a, 216b the ratio between the sum of the length of the mixing sections 222, 226 and the overall length of each screw 216a, 216b is comprised between about 18% and 22%, preferably between about 19% and 21%, for example about 20%. In some forms of embodiment, the length of the mixing section 222 is comprised between 280 mm and 320 mm, for example 300 mm, while the length of the mixing section 226 is comprised between 480 mm and 520 mm, for example 500 mm.

In some forms of embodiment, the sum of the lengths of the sections from 218 to 222, where the material is melted, is comprised between about 1264 mm and 1384 mm, for example about 1324 mm.

In some forms of embodiment, the second transport section 224, where injection is carried out, has a length comprised between about 560 mm and 600 mm, for example about 580 mm.

In some forms of embodiment, the sum of the lengths of the sections from 228 to 232, where the material is cooled, is comprised between about 1520 mm and 1640, for example about 1580 mm.

In some forms of embodiment, the length of each screw 216a, 216b is comprised between about 3825 mm and 4145 mm, for example about 3984 mm.

In some forms of embodiment, the one-screw secondary extruder 217 has an overall length of between 3480 mm and 3520 mm, for example about 3500 mm, and a diameter of about 200 - 220 mm for productions of 300 - 500 Kg/hr, about 260 mm - 280 mm for productions of 650 - 750, also up to 800 Kg/hr, and about 360 mm for productions of 1200 Kg/hr. The screw of the secondary extruder 217 axially has variations in profile that define the following operating zones:
- loading zone 250;
- cooling zone 252;
- mixing zone 254;
- spreading zone 256.

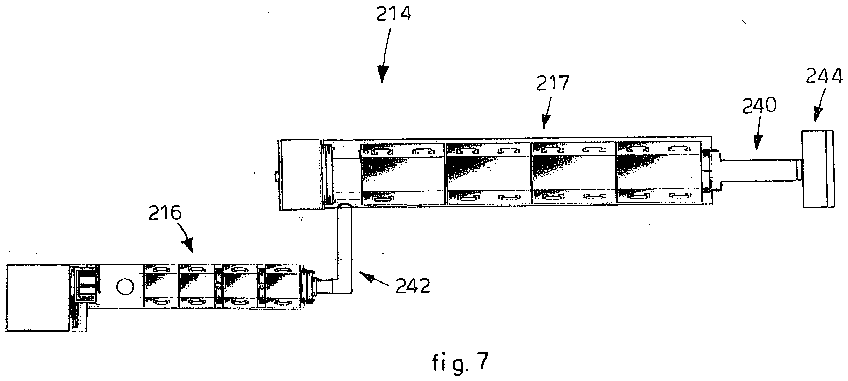

Fig. 7 shows the screw-type extrusion means 214 in which the primary extruder 216 cooperates with a static mixer 242 Sulzer type Optifoam, with the possibility of a further introduction of gas from 0.1% to 1% order to lower the density to about 25-30%, and subsequently there is the secondary extruder 217, with the sole function of transporting and cooling the molten mass, keeping the polystyrene mixed with the gas. In turn the extruder cooperates with a static mixer 240 Sulzer type SMR or SMB-R to further cool the material, and a subsequent automatic head or draw-plate 244. It is possible to make a "HELIX" type groove on the internal surface of the cylinder that houses the screw of the extruder.

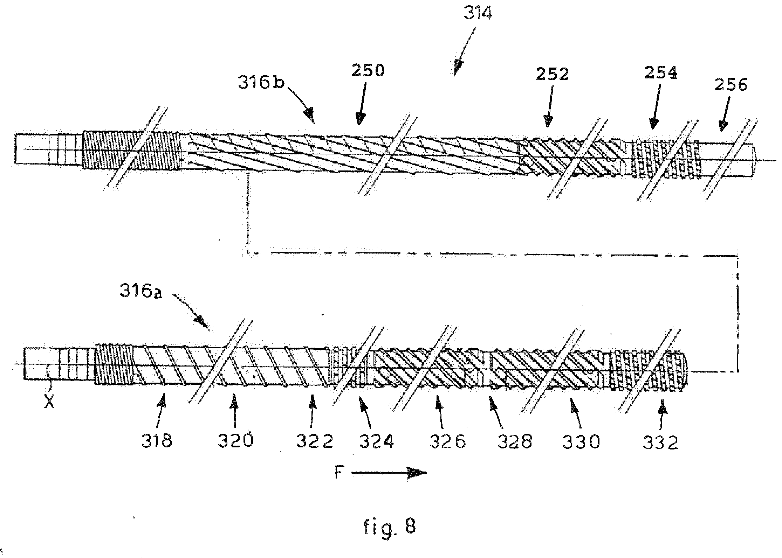

Fig. 8 shows a third form of embodiment of the screw-type extrusion means, indicated for convenience by the reference number 314, configured substantially as a one-screw in one-screw tandem. The extrusion system in this case consists of two extruders 316a, 316b mounted in cascade. The exit of the first extruder, commonly called primary, 316a is connected directly to the inlet of the second extruder, called secondary, 316b by means of a connection tube, which may have different shapes depending on the type of installation of the machines, and may be equipped with a system to filter the molten material.

The profile of the screw of the first extruder 316a, which has a diameter of about 160 mm - 180 mm for a production of about 700 - 900 Kg/hr, is variable to define the following operating sections, disposed one after the other along the axis of the first extruder 316a as can be seen in fig. 8:
- loading section 318 to load the material;
- compression section 320;
- section for metering or melting the material 322;
- counter-pressure stopper section 324, where the spirals of the profile of the screw are substantially inclined by 90° with respect to the axis of the screw, so as to prevent the material from returning backward;
- first compression and pumping section 326, necessary for mixing the material with the additives added;
- at least a section to inject the expansion gas 328;
- second compression and pumping section 330, necessary for mixing the material with the expansion gas injected;
- final mixing section 332.

These sections can be modified in length depending on the material used, so that it is possible to obtain the same characteristics.

Except for the counter-pressure stopper section 324, the spirals of the screw of the first extruder 316a face backward, that is, with a negative inclination with respect to the direction of feed F of the material, since they have to have the function of braking the advancing material so as to create a determinate mixing pressure.

Depending on the expansion gases used, more than one injection section of the expansion agent may be provided.

The secondary extruder 316b is the same type as the secondary extruder 217 described for the form of embodiment in figs. 6, 7, but having a transverse diameter of 280 mm.

In this case too, it is possible to make a "HELIX" type groove on the internal surface of the cylinder that houses the screw of the extruder.

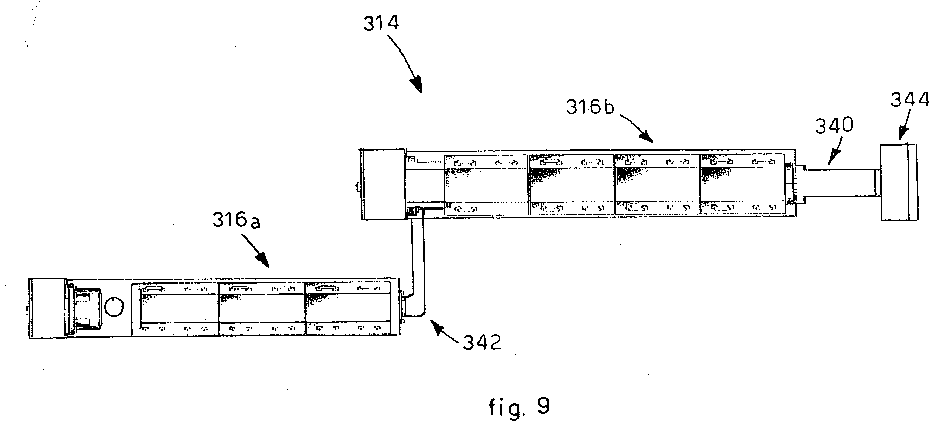

Fig. 9 shows the extruder 314 in which the primary extruder 316a cooperates with a static mixer 342 Sulzer type Optifoam, with the possibility of a further introduction of gas from 0.1% to 1% in order to lower the density to about 25-30%, and subsequently there is the secondary extruder 316b, with the sole function of transporting and cooling the molten mass, which in turn cooperates with a static mixer 340 Sulzer type SMR or SMB-R, to further cool the material and a subsequent automatic head or draw-plate 244.

With the forms of embodiment 114, 214, 314 it is possible to work an extruded mass with 100% of re-granulated polystyrene with M.F.I. values of up to 40.

### PRELIMINARY EXPERIMENTAL TESTS FOR HEAT CONDUCTIVITY

The following tests refer to non-aged samples of slabs or panels made according to the invention, substantially using only re-granulated polystyrene from scrap, without the addition of first quality polystyrene, compared with the values normally found for insulating materials known in the state of the art. Analogous improvements were obtained with sheets made according to the invention.

### EXAMPLE 1

Applicant made a slab of extruded polystyrene according to the invention with a voluminal mass (density) of 32.6 Kg/ m³ and thickness of about 2 cm, which after experimental tests showed a heat conductivity of about 0.0249 (W/m*°K).

### EXAMPLE 2

Applicant made a slab of extruded polystyrene according to the invention with a voluminal mass (density) of 36.3 Kg/m³ and thickness of about 2 cm, which after experimental tests showed a heat conductivity of about 0.0253 (W/m*°K).

### COMPARATIVE EXAMPLE

In Applicant's experience, normally insulations based on extruded polystyrene deriving from first quality material, that is, non-recycled, with a voluminal mass (density) comprised between 30 Kg/m³ and 40 Kg/m³, in the case of non-aged samples have a heat conductivity comprised between 0.027 and 0.032 (W/m*°K), whereas for aged samples, as laid down by regulation EN 13164, the heat conductivity is generally comprised between 0.031 and 0.037 (W/m*°K). In fact, normally the value of heat conductivity of the panels or slabs in the state of the art tends to increase with ageing.

Consequently, the present invention demonstrates a significant improvement in the performance of heat insulation with respect to comparable products in the state of the art.

## Claims

1. Heat insulating panel made of closed-cells expanded extruded polystyrene, wherein said panel is made with granules of re-granulated polystyrene from scraps from the production of panels or slabs of extruded polystyrene which comprises one or more members of the group consisting of carbon, a flame retardant additive, a nucleant additive, microspheres or pre-disperseds with an elastomeric polymer base or rubbers or flours derived from vegetable and/or wood fibers which function as sound absorbents, and not from discards from post-consumption products or solid urban waste wherein the re-granulated polystyrene is free of residues, additional chemical compounds or other pollutants and has an M.F.I. value comprised between 5 and 60,
**characterised in that**
the re-granulated polystyrene comprises graphite and the panel in a non-aged state has a thickness of 2cm and a heat conductivity of less than 0.027W/m*K°.

2. Heat insulating panel as in claim 1, **characterized in that** with polystyrene from scrap having M.F.I. values of from 20 up to 40 the article comprises up to 100% of re-granulated polystyrene from scrap and with polystyrene from scrap having M.F.I. values from about 40 to about 60, the article comprises re-granulated polystyrene from scrap comprised between about 70% and about 90%, preferably between about 80% and about 90%, and first quality polystyrene comprised between about 10% and about 30%, preferably between about 10% and about 20%.

3. Heat insulating panel as in claim 1, **characterized in that** the re-granulated polystyrene used has an M.F.I. value comprised between 20 and 50, more preferably between 30 and 40.

4. Heat insulating panel as in any claim hereinbefore, **characterized in that** said graphite of said re-granulated polystyrene granules comprises native graphite.

5. Heat insulating panel as in claim 4, **characterized in that** it also comprises further graphite added between 1% and 5% in weight as well as the native graphite already in said re-granulated polystyrene granules.

6. Heat insulating panel as in claim 4, **characterized in that** it also comprises carbon between 1% and 5% in weight apart from the native graphite present in said re-granulated polystyrene granules.

7. Method to make a heat insulating panel made of closed-cells expanded extruded polystyrene according to any claims from 1 to 6, **characterized by** a step of continuous extrusion wherein, during the extrusion step an expansion gas is continuously introduced in order to achieve the heat insulating panel.

8. Method as in claim 7, **characterized in that,** with polystyrene from scrap having M.F.I. values of from 20 up to 40, up to 100% of re-granulated polystyrene from scrap is used to produce said article and with polystyrene from scrap having M.F.I. values from about 40 to about 60, re-granulated polystyrene from scrap comprised between about 70% and about 90%, preferably between about 80% and about 90%, and first quality polystyrene comprised between about 10% and about 30%, preferably between about 10% and about 20% are used to produce said article.

9. Method as in claim 7, **characterized in that** the re-granulated polystyrene used has an M.F.I. value comprised between 20 and 50, more preferably between 30 and 40.

10. Method as in any claims from 7 to 9, **characterized in that** said step of continuous extrusion to melt said polystyrene so that the liquid mass obtained can receive one or more expansion gases is performed in an extrusion unit (12).

11. Method as in claim 10, **characterized in that** said extrusion unit (12) is a co-rotating two-screw extruder (114) comprising a first (116a) and a second (116b) extrusion screw, of which the first screw (116a) has an extension beyond the length of the second screw (116b) in the direction of feed (F) of the material, defining a cooling segment (134) and in which, for each screw (116a, 116b) there is a plurality of mixing sections (122, 126, 130) having an overall sum of the corresponding lengths whose ratio with respect to the overall length of each screw (116a, 116b), excluding the length of the cooling segment (134), is comprised between about 32.5% and 38.5%, preferably between about 35% and 36%.

12. Method as in claim 10, **characterized in that** said extrusion unit (12) is a two-screw-one-screw tandem (214), comprising a first two-screw extruder (216) with two screws (216a, 216b) to which a second one-screw extruder (217) is connected in cascade, in which for each screw (216a, 216b) of the first extruder (216) there is a plurality of mixing sections (222, 226) in which, for each screw (216a, 216b), the ratio between the sum of the length of the mixing sections (222, 226) and the overall length of each screw (216a, 216b) is comprised between about 18% and 22%, preferably between about 19% and 21%.

13. Method as in claim 10, **characterized in that** said extrusion unit (12) is a one-screw-one-screw tandem (314), comprising a first one-screw extruder (316a) to which a second one-screw extruder (316b) is connected in cascade, wherein the profile of the screw of the first one-screw extruder (316a) is variable to define the following operating sections, disposed one after the other along the axis of the first extruder (316a).

14. Method according to claim 13, **characterized in that** said method further comprises:
- loading the material in a loading section (318);
- compressing the material in a compression section (320);
- metering or melting the material in a section for metering or melting the material (322);
- preventing the material from returning backward using counter-pressure stopper section (324), where spirals of the profile of the screw are substantially inclined by 90° with respect to the axis of the screw;
- mixing the material with the additives added by a first compression and pumping section (326;
- injecting the expansion gas in at least a section to inject the expansion gas (328);
- mixing the material with the expansion gas injected in a second compression and pumping section (330);
- mixing the material in a final mixing section (332);
wherein, except for the counter-pressure stopper section (324), the spirals of the screw of the first one-screw extruder (316a) face backward, having a negative inclination with respect to a direction of feed (F) of the material;
further wherein the profile of the screw of the second one-screw extruder (316b) is variable to define the following operating zones:
- loading zone (250);
- cooling zone (252);
- mixing zone (254);
- spreading zone (256).

## Patentansprüche

1. Wärmeisolationspaneel, das aus geschlossene-Zellen-expandiertem-extrudiertem-Polystyrol gemacht ist, wobei das Paneel hergestellt ist mit Granulaten aus wieder-granuliertem Polystyrol aus Verschnitten aus der Produktion von Paneelen oder Platten aus extrudiertem Polystyrol, welches ein oder mehr Elemente aus der Gruppe aufweist, die besteht aus Kohlenstoff, einem flammenhemmenden Additiv, einem Nukleierungsadditiv, Mikrokugeln oder Vor-Feinverteilungen mit einer Elastomer-Polymer-Basis oder Gummis oder Mehlen erhalten von Gemüse und/oder Holzfasern, die als Schallabsorber wirken, und nicht aus Abfällen von Nach-Verbrauch-Produkten oder festen Siedlungsabfällen, wobei das wieder-granulierte Polystyrol frei ist von Rückständen, zusätzlichen chemischen Verbindungen oder anderen Verunreinigungen und einen Schmelzindex (M.F.I.)-Wert hat, der zwischen 5 und 60 liegt, **dadurch gekennzeichnet, dass**
das wieder-granulierte Polystyrol Graphit aufweist und
das Paneel in einem nicht-gealterten Zustand eine Dicke von 2cm und eine Wärmeleitfähigkeit von kleiner als 0,027 W/m*K° hat.

2. Wärmeisolationspaneel gemäß Anspruch 1, **dadurch gekennzeichnet, dass**, mit Polystyrol aus Verschnitt mit M.F.I.-Werten von 20 bis zu 40, der Artikel bis zu 100% wieder-granuliertes Polystyrol aus Verschnitt aufweist und, mit Polystyrol aus Verschnitt mit M.F.I.-Werten von 40 bis etwa 60, der Artikel wieder-granuliertes Polystyrol aus Verschnitt von zwischen etwa 70% und etwa 90%, bevorzugt zwischen etwa 80% und etwa 90%, liegend und erste-Qualität-Polystyrol von zwischen etwa 10% und etwa 30%, bevorzugt zwischen etwa 10% und etwa 20%, liegend aufweist.

3. Wärmeisolationspaneel gemäß Anspruch 1, **dadurch gekennzeichnet, dass** das verwendete wieder-granulierte Polystyrol einen M.F.I.-Wert hat, der zwischen 20 und 50, bevorzugter zwischen 30 und 40, liegt.

4. Wärmeisolationspaneel gemäß irgendeinem vorigen Anspruch, **dadurch gekennzeichnet, dass** das Graphit der wieder-granulierten Polystyrol-Granulate natives Graphit aufweist.

5. Wärmeisolationspaneel gemäß Anspruch 4, **dadurch gekennzeichnet, dass** es auch aufweist zusätzliches Graphit, das hinzugefügt ist, zwischen 1% und 5% in Gewicht sowie das natives Graphit, das bereits in den wieder-granulierten Polystyrol-Granulaten ist.

6. Wärmeisolationspaneel gemäß Anspruch 4, **dadurch gekennzeichnet, dass** es auch aufweist Kohlenstoff zwischen 1% und 5% in Gewicht neben dem nativen Graphit, das in den wieder-granulierten Polystyrol-Granulaten vorliegt.

7. Verfahren zum Herstellen eines Wärmeisolationspaneels, das aus geschlossene-Zellen-expandiertem-extrudiertem Polystyrol gemacht ist, gemäß irgendeinem der Ansprüche 1 bis 6, **gekennzeichnet durch** einen Schritt einer kontinuierlichen Extrusion, wobei während des Extrusion-Schritts ein Expansionsgas kontinuierlich eingegeben wird, um das Wärmeisolationspaneel zu erzielen.

8. Verfahren gemäß Anspruch 7, **dadurch gekennzeichnet, dass**, mit Polystyrol aus Verschnitt mit M.F.I.-Werten von 20 bis zu 40, bis zu 100% aus wieder-granuliertem Polystyrol aus Verschnitt verwendet wird, um den Artikel herzustellen, und, mit Polystyrol aus Verschnitt mit M.F.I.-Werten von etwa 40 bis etwa 60, wieder-granuliertes Polystyrol aus Verschnitt zwischen etwa 70% und etwa 90%, bevorzugt zwischen etwa 80% und etwa 90%, liegend und erste-Qualität-Polystyrol zwischen etwa 10% und etwa 30%, bevorzugt zwischen etwa 10% und etwa 20%, liegend verwendet werden, um den Artikel herzustellen.

9. Verfahren gemäß Anspruch 7, **dadurch gekennzeichnet, dass** das wieder-granulierte Polystyrol, das verwendet wird, einen M.F.I.-Wert hat, der zwischen 20 und 50, bevorzugt 30 und 40, liegt.

10. Verfahren gemäß irgendeinem der Ansprüche 7 bis 9, **dadurch gekennzeichnet, dass** der Schritt der kontinuierlichen Extrusion, um das Polystyrol zu schmelzen, sodass die erzielte flüssige Masse ein oder mehrere Expansionsgase empfangen kann, in einer Extrusion-Einheit (12) durchgeführt wird.

11. Verfahren gemäß Anspruch 10, **dadurch gekennzeichnet, dass** die Extrusion-Einheit (12) ein gleichrotierender Doppel-Schnecke-Extruder (114) ist, der eine erste (116a) und eine zweite (116b) Extrusion-Schnecke aufweist, von denen die erste Schnecke (116a) in der Transportrichtung (F) des Materials eine Erstreckung über die Länge der zweiten Schnecke (116b) hinausgehend hat, der einen Kühlabschnitt (134) definiert und bei dem für jede Schnecke (116a, 116b) eine Mehrzahl von Mischbereichen (122, 126, 130) gegeben ist, die eine Gesamtsumme der korrespondierenden Längen haben, deren Verhältnis bezüglich der Gesamtlänge jeder Schnecke (116a, 116b), exklusive der Länge des Kühlabschnitts (134), zwischen etwa 32,5% und 38,5%, bevorzugt zwischen etwa 35% und 36%, liegt.

12. Verfahren gemäß Anspruch 10, **dadurch gekennzeichnet, dass** die Extrusion-Einheit (12) ein Doppel-Schnecke-Einzel-Schnecke-Tandem (214) ist, aufweisend einen ersten Doppel-Schnecke-Extruder (216) mit zwei Schnecken (216a, 216b), an welchen ein zweiter Einzel-Schnecke-Extruder (217) in Kaskade angeschlossen ist, wobei für jede Schnecke (216a, 216b) des ersten Extruders (216) eine Mehrzahl von Mischbereichen (222, 226) gegeben ist, bei denen für jede Schnecke (216a, 216b) das Verhältnis zwischen der Summe der Länge der Mischbereiche (222, 226) und der Gesamtlänge jeder Schnecke (216a, 216b) zwischen etwa 18% und 22%, bevorzugt zwischen etwa 19% und 21%, liegt.

13. Verfahren gemäß Anspruch 10, **dadurch gekennzeichnet, dass** die Extrusion-Einheit (12) ein Einzel-Schnecke-Einzel-Schnecke-Tandem (314) ist, aufweisend einen erste Einzel-Schnecke-Extruder (316a), an welchen ein zweiter Einzel-Schnecke-Extruder (316b) in Kaskade angeschlossen ist, wobei das Profil der Schnecke des ersten Einzel-Schnecke-Extruders (316a) variabel ist, um die folgenden Betriebsbereiche zu definieren, die nacheinander entlang der Achse des ersten Extruders (316a) angeordnet sind.

14. Verfahren gemäß Anspruch 13, **dadurch gekennzeichnet, dass** das Verfahren ferner aufweist:
- Laden des Materials in einen Ladebereich (318),
- Komprimieren des Materials in einem Komprimierbereich (320),
- Abmessen oder Schmelzen des Materials in einem Bereich zum Abmessen oder Schmelzen des Materials (322),
- Verhindern, dass das Material zurück gelangen kann, unter Verwenden eines Gegendruck-Stopp-Abschnitts (324), wo Windungen des Profils der Schnecke im Wesentlichen um 90° bezüglich der Achse der Schnecke geneigt sind,
- Mischen des Materials mit den Additiven, die durch einen ersten Komprimier- und Pump-Abschnitt (326) hinzugefügt werden,
- Eingeben des Expansionsgases in wenigstens einen Abschnitt zum Eingeben des Expansionsgases (328),
- Mischen des Materials mit dem Expansionsgas, das in einen zweiten Komprimier- und Pump-Abschnitt (330) eingegeben wurde,
- Mischen des Materials in einem finalen Mischabschnitt (332), wobei, außer für den Gegendruck-Stopp-Abschnitt (324), die Windungen der Schnecke des ersten Einzel-Schnecke-Extruders (316a) nach hinten gewandt sind mit einer negativen Neigung bezüglich einer Transportrichtung (F) des Materials,
wobei ferner das Profil der Schnecke des zweiten Einzel-Schnecke-Extruders (316b) variabel ist, um die folgenden Betriebsbereiche zu definieren:
- Ladebereich (250),
- Kühlbereich (252),
- Mischbereich (254),
- Verteilbereich (256).

## Revendications

1. Panneau isolant thermique en polystyrène extrudé, expansé, à cellules fermées, dans lequel ledit panneau est constitué de granules de polystyrène regranulé provenant de déchets issus de la fabrication de panneaux ou de plaques de polystyrène extrudé comprenant un ou plusieurs membres du groupe comprenant du carbone, un additif ignifuge, un additif nucléant, des microsphères ou des pré-dispersés avec une base de polymère élastomère ou de caoutchoucs ou de farines issues de fibres végétales et/ou de bois qui agissent comme absorbeurs de sons, et non de déchets de produits de post-consommation ou de déchets urbains solides, dans lequel le polystyrène regranulé est exempt de résidus, de composés chimiques supplémentaires ou d'autres polluants et possède une valeur MFI comprise entre 5 et 60,
**caractérisé en ce que**
le polystyrène regranulé comprend du graphite et le panneau à l'état non vieilli a une épaisseur de 2 cm et une conductivité thermique inférieure à 0,027W/m * K°.

2. Panneau isolant thermique selon la revendication 1, **caractérisé en ce qu'**il contient du polystyrène provenant de déchets ayant des valeurs MFI de 20 à 40, l'article comprend jusqu'à 100 % de polystyrène regranulé issu de déchets et de polystyrène issu de déchets ayant des valeurs MFI d'environ 40 à environ 60, l'article comprend du polystyrène regranulé issu de déchets compris entre environ 70 % et environ 90 %, de préférence entre environ 80 % et environ 90 %, et du polystyrène de première qualité compris entre environ 10 % et environ 30 %, de préférence entre environ 10 % et environ 20 %.

3. Panneau isolant thermique selon la revendication 1, **caractérisé en ce que** le polystyrène regranulé utilisé a une valeur MFI comprise entre 20 et 50, de manière plus préférée entre 30 et 40.

4. Panneau isolant thermique selon l'une quelconque des revendications précédentes, **caractérisé en ce que** ledit graphite desdites granules de polystyrène regranulé comprend du graphite natif.

5. Panneau isolant thermique selon la revendication 4, **caractérisé en ce qu'**il comprend en outre du graphite additionné de 1 % à 5 % en poids, ainsi que du graphite natif déjà présent dans lesdites granules de polystyrène regranulé.

6. Panneau isolant thermique selon la revendication 4, **caractérisé en ce qu'**il comprend également entre 1 % et 5 % en poids de carbone en plus du graphite natif présent dans lesdites granules de polystyrène regranulé.

7. Méthode de fabrication d'un panneau isolant thermique en polystyrène extrudé, expansé, à cellules fermées, selon l'une quelconque des revendications 1 à 6, **caractérisée par** une étape d'extrusion continue, dans lequel au cours de l'étape d'extrusion, un gaz de détente est introduit en continu afin d'obtenir le panneau isolant thermique.

8. Méthode selon la revendication 7, **caractérisée en ce qu'**avec du polystyrène issu de déchets ayant des valeurs MFI allant de 20 à 40, jusqu'à 100 % de polystyrène regranulé issu de déchets sont utilisés pour produire ledit article et avec du polystyrène issu de déchets ayant des valeurs MFI d'environ 40 à environ 60, du polystyrène regranulé issu de déchets compris entre environ 70 % et environ 90 %, de préférence entre environ 80 % et environ 90 %, et du polystyrène de première qualité compris entre environ 10 % et environ 30 %, de préférence entre environ 10 % et environ 20 %, sont utilisés pour produire ledit article.

9. Méthode selon la revendication 7, **caractérisée en ce que** le polystyrène regranulé utilisé a une valeur MFI comprise entre 20 et 50, de manière plus préférée entre 30 et 40.

10. Méthode selon l'une quelconque des revendications 7 à 9, **caractérisé en ce que** ladite étape d'extrusion continue pour faire fondre ledit polystyrène de sorte que la masse de liquide obtenue puisse recevoir un ou plusieurs gaz de détente est réalisée dans une unité d'extrusion (12).

11. Méthode selon la revendication 10, **caractérisée en ce que** ladite unité d'extrusion (12) est une extrudeuse à deux vis co-rotative (114) comprenant une première (116a) et une seconde (116b) vis d'extrusion, dont la première vis (116a) présente une extension au-delà de la longueur de la second vis (116b) dans la direction d'alimentation (F) du matériau, en définissant un segment de refroidissement (134) et dans laquelle, pour chaque vis (116a, 116b), il existe une pluralité de tronçons de mélange (122, 126, 130) ayant une somme globale des longueurs correspondantes dont le rapport par rapport à la longueur totale de chaque vis (116a, 116b), à l'exclusion de la longueur du segment de refroidissement (134), est compris entre environ 32,5 % et 38,5 %, de préférence entre environ 35 % et 36 %.

12. Méthode selon la revendication 10, **caractérisée en ce que** ladite unité d'extrusion (12) est un tandem à deux vis-une vis (214), comprenant une première extrudeuse à deux vis (216) avec deux vis (216a, 216b) à laquelle une seconde extrudeuse à une vis (217) est connectée en cascade, dans laquelle, pour chaque vis (216a, 216b) de la première extrudeuse (216), il existe une pluralité de sections de mélange (222, 226) dans lesquels, pour chaque vis (216a, 216b), le rapport entre la somme de la longueur des tronçons de mélange (222, 226) et la longueur totale de chaque vis (216a, 216b) est compris entre environ 18 % et 22 %, de préférence entre environ 19 % et 21 %.

13. Méthode selon la revendication 10, **caractérisée en ce que** ladite unité d'extrusion (12) est un tandem à une vis-une vis (314), comprenant une première extrudeuse à une vis (316a) à laquelle une seconde extrudeuse à une vis (316b) est connectée en cascade, dans laquelle le profil de la vis de la première extrudeuse à une vis (316a) est variable pour définir les tronçons de fonctionnement suivants, disposées les uns après les autres le long de l'axe de la première extrudeuse (316a).

14. Méthode selon la revendication 13, **caractérisée en ce que** ladite méthode comprend en outre les étapes consistant à :
charger le matériau dans un tronçon de chargement (318) ;
comprimer le matériau dans une section de compression (320) ;
doser ou faire fondre le matériau dans un tronçon pour doser ou faire fondre le matériau (322) ;
empêcher le matériau de revenir en arrière en utilisant un tronçon de bouchon de contre-pression (324), dans laquelle des spires du profil de la vis sont sensiblement inclinées de 90° par rapport à l'axe de la vis ;
mélanger le matériau avec les additifs ajoutés par une première section de compression et de pompage (326) ;
injecter le gaz de détente dans au moins un tronçon pour injecter le gaz de détente (328) ;
mélanger le matériau avec le gaz de détente injecté dans un second tronçon de compression et de pompage (330) ;
mélanger le matériau dans une section de mélange final (332) ;
dans lequel, à l'exception du tronçon de bouchon de contre-pression (324), les spirales de la vis de la première extrudeuse à une vis (316a) sont dirigées vers l'arrière, ayant une inclinaison négative par rapport à une direction d'alimentation (F) du matériau ;
dans lequel en outre le profil de la vis de la seconde extrudeuse à une vis (316b) est variable pour définir les zones de fonctionnement suivantes :
zone de chargement (250) ;
zone de refroidissement (252) ;
zone de mélange (254) ;
zone d'étalement (256).
